# EUROPÄISCHE PATENTSCHRIFT

(11) **EP 3 047 818 B1**
(45) Veröffentlichungstag und Bekanntmachung des Hinweises auf die Patenterteilung: **26.09.2018**
(21) Anmeldenummer: 16152024.2
(22) Anmeldetag: 20.01.2016
(51) Int. Cl.: A61C 13/00, B23Q 3/06

(54) **HALTEVORRICHTUNG FÜR EIN DENTALES WERKSTÜCK**
HOLDING DEVICE FOR A DENTAL WORKPIECE
DISPOSITIF DE RETENUE POUR UNE PIECE DENTAIRE

(30) Priorität: 21.01.2015 AT 252015
(43) Veröffentlichungstag der Anmeldung: 27.07.2016
(73) Patentinhaber: STEGER, Heinrich, 39031 Bruneck (IT)
(72) Erfinder: STEGER, Heinrich, 39031 Bruneck (IT)
(74) Vertreter: Torggler & Hofinger Patentanwälte

(56) Entgegenhaltungen:
- EP-A1- 2 604 219
- EP-A1- 2 837 357
- EP-A2- 1 068 839
- KR-B1- 101 419 832

## Beschreibung

Die Erfindung betrifft eine Haltevorrichtung für ein, insbesondere dentales, Werkstück, mit einem Halteelement und einer Befestigungsvorrichtung, wobei durch eine Relativbewegung der Befestigungsvorrichtung zum Halteelement das Werkstück an der Haltevorrichtung befestigbar ist. Weiters betrifft die Erfindung ein Set mit einer solchen Haltevorrichtung und einem dentalen Werkstück. Darüber hinaus betrifft die Erfindung auch eine Bearbeitungsmaschine mit einer solchen Haltevorrichtung. Weiters betrifft die Erfindung ein Verfahren zur Herstellung einer Haltevorrichtung.

In Zahnlaboren werden seit vielen Jahren diverse Vorrichtungen wie beispielsweise CNC-Maschinen eingesetzt, um dentale Werkstücke automatisiert herzustellen bzw. zu bearbeiten. Ein wichtiger Aspekt dabei ist, dass das meist als Rohling vorliegende dentale Werkstück gut gehalten wird, sodass eine exakte Bearbeitung des dentalen Werkstücks über ein Bearbeitungswerkzeug möglich ist. Dafür gibt es bereits diverse Haltevorrichtungen, die meist eine Art Halteelement (auch Halterahmen oder Trägerplatte genannt) und eine Befestigungsvorrichtung für das Werkstück am Halteelement aufweisen.
Ein Beispiel dafür geht aus der DE 100 37 531 A1 hervor. Diese zeigt eine Vorrichtung zur Herstellung von dentalen Werkstücken. In einem Trägerkörper ist dabei eine Ausnehmung für den Rohling vorgesehen. Mit der Außenseite ist der Trägerkörper in eine Bearbeitungsmaschine einspannbar. Der Rohling wird nur mit einem Teil der Ausnehmung verbunden. Eine mittige rechteckige Ausnehmung dient zur Aufnahme des zylindrischen Rohlings. Der Rohling ist an zwei einander gegenüberliegenden Flächen mit den entsprechenden Wänden der Ausnehmung verklebt. Diese Klebstoffhalterung ist relativ aufwändig und hinterlässt Rückstände. Weiters ist ein Ausführungsbeispiel mit einer klebstofffreien Halterung gezeigt, etwa durch einen mechanischen Formschluss. Dies wird dadurch erreicht, dass der Rohling selbst zwei gegenüberliegende pilzförmige Ansätze aufweist, die in eine Ausnehmung eingreifen. Nachteilig ist bei dieser Variante, dass der Rohling selbst relativ kompliziert ausgebildet sein muss. Zudem ist die Beanspruchung der Rohlinge im Bereich der Ansätze bzw. in erweiterten Bereich relativ hoch. Bei dieser direkten Verbindungsvariante können daher Schäden am Rohling vor allem durch die hohe Druckbelastung nicht ausgeschlossen werden.

Eine weitere Halteanordnung für Werkstücke geht aus der EP 2 026 931 B1 hervor. Demnach weist ein Spannrahmen eine Ausnehmung auf, wobei am Spannrahmen nach innen frei auskragende Stützteile ausgebildet sind. Zudem ist am Spannrahmen eine Klemmvorrichtung vorgesehen. Über diese Klemmvorrichtung ist eine rahmenförmige Halteanordnung am Spannrahmen festlegbar. In dieser Haltevorrichtung wiederum ist das Werkstück verklebt oder verschweißt. Bevorzugt ist es kraft- und/oder formschlüssig gehalten. Allgemein ist angeführt, dass das Werkstück samt Halteanordnung mittels einer Klemmvorrichtung fest und unverschiebbar in einer spanabhebenden Bearbeitungsvorrichtung, und zwar an einem dort einfügbaren Spannrahmen, einsetzbar ist. Wie aber genau die kraft- und/oder formschlüssige Verbindung zwischen dem Werkstück und der Halteranordnung erfolgt, ist in dieser Schrift nicht erläutert.

Die US 2009/0274994 A1 zeigt eine Dentalfräsmaschine auf Basis einer CNC-Maschine. Hierbei werden die einzelnen Rohlinge am Halterahmen über einen Vorsprung fixiert. Es wird nicht näher auf die genaue Befestigung eingegangen, vielmehr geht es darum, dass kleinere und größere Rohlinge angebracht werden können.

Auch die DE 20 2010 001 125 U1 zeigt eine Vorrichtung zum Halten und/oder Spannen von zur Herstellung von Zahnersatzteilen dienenden Rohlingen. Dazu ist eine äußere ringförmige Aufnahmevorrichtung mit einer Aufnahmeöffnung vorgesehen. Der Rohling kann direkt über Spannmittel oder Spannpratzen in der Aufnahmevorrichtung gehalten werden. Es ist aber auch möglich, dass anstatt eines großen Rohlings ein Adapter in die Aufnahmevorrichtung eingesetzt wird, wobei wiederum an diesem Adapter ein Rohling oder mehrere Rohlinge angebracht werden. Die Spannpratzen sind lösbar oder auswechselbar an der Aufnahmevorrichtung angebracht. Es können verschieden lange Spannpratzen eingesetzt werden, um unterschiedlich dicke Rohlinge zu erfassen. Nachteilig ist hier, dass die Spannpratzen direkt auf einem relativ kleinen Bereich des Rohling aufliegen, wodurch ein relativ hoher Druck in diesem Bereich auf den Rohling wirkt. Dies kann zu ungewünschten Verformungen oder zu einer Überlastung des Rohlingmaterials führen.

Weiters zeigt die WO 2013/117540 A1 eine Rohlingaufnahme für eine Detalfräsmaschine. Demgemäß gibt es einen äußeren Einspannhalter und einen inneren Werkstückhalter, an dem wiederum ein Stützvorsprung für den Rohling ausgebildet ist. Zudem ist eine Spannvorrichtung vorgesehen, die den Rohling gegen den Stützvorsprung drückt. Die Spannvorrichtung ist am Werkstückhalter über Schraubbolzen lösbar gelagert. Es erfolgt somit eine Verklemmung des Rohlings zwischen Spannvorrichtung und Stützvorsprung. Auch hierbei ist nachteilig, dass eine direkte Verklemmung in einem kleinen Bereich des Rohlings erfolgt und der Rohling eine relativ komplizierte Form aufweisen muss. Auch sind relativ viele Komponenten für die Befestigung erforderlich.

Weiters ist auch noch die DE 41 37 563 C1 bekannt, die eine Vorrichtung zur Aufnahme von Werkstücken variierender Abmessungen zeigt. Rohlinge mit unterschiedlicher Außenkontur werden zwischen Prismenträger eingespannt. Für ein gleichmäßiges beiderseitiges Öffnen sind Nocken vorgesehen, die in halbkreisförmige Ausnehmungen eines Kurvenkörpers eingreifen. Bedingt durch die kurvenförmige Kontur der Ausnehmungen ist der Stellweg, den die Prismenträger zurücklegen, identisch und jeweils vom gleichen Betrag, bezogen auf die theoretische Mittelachse. Es gibt somit eine kurvengeführte Verengung von Klemmflächen. Auch hierbei sind für die Befestigung relativ viele Komponenten notwendig.

Auch die DE 10 2010 061 116 A1 zeigt ein Verfahren zur Herstellung von dentalen Werkstücken, wobei ein Werkstück mit einem geklebten Rahmen für die Befestigung in einem Werkstückhalter per Klemmwirkung verbunden ist. Das Werkstück selbst kann dabei mit einem vorspringenden Absatz bzw. mit einer Kerbe versehen sein, in welche ein kongruentes Gegenstück der Klemmvorrichtung im Bereich einer Achse in Form eines Keils eingreift. Diese Klemm- bzw. Keilwirkung erfolgt hierbei auch nachteilig direkt an einem relativ kleinen Bereich des Werkstücks und kann somit Schäden im zu haltenden Werkstück verursachen.

Die Haltevorrichtung gemäß der Erfindung sieht weiters vor, dass das Halteelement und die Befestigungsvorrichtung miteinander korrespondierende Keilflächen aufweisen, wobei durch die Relativbewegung der Befestigungsvorrichtung zum Halteelement über die aneinander anliegenden Keilflächen die Befestigungsvorrichtung am Halteelement befestigbar, vorzugsweise verkeilbar, ist, und dass die Befestigungsvorrichtung oder das Halteelement eine geschlitzte Buchse mit einem sich in Längsrichtung erstreckenden Schlitz aufweist, wobei die Innenfläche der geschlitzten Buchse eine Spannfläche für das Werkstück bildet und wobei bei der Relativbewegung der Befestigungsvorrichtung zum Halteelement das Werkstück über die Spannfläche an der Haltevorrichtung verspannbar ist. Eine derartige Haltevorrichtung ist beispielsweise in der KR 10-1419832 B1 gezeigt.

Die Aufgabe der vorliegenden Erfindung besteht daher darin, eine gegenüber dem Stand der Technik verbesserte Haltevorrichtung bzw. eine alternative Haltevorrichtung zu schaffen. Insbesondere soll die Haltevorrichtung konstruktiv einfach aufgebaut sein und ein sicherer Halt des Werkstücks garantiert werden können.

Dies wird durch eine Haltevorrichtung mit den Merkmalen von Anspruch 1 erreicht. Demnach ist erfindungsgemäß vorgesehen, dass der Schlitz von einer oberen Kante bis zu einer unteren Kante der Befestigungsvorrichtung oder des Halteelements reicht, wobei der Schlitz als Ausnehmung ausgebildet ist oder mit einem nachgiebigen Material gefüllt ist. Diese geschlitzte Buchse ermöglicht somit eine umfängliche Befestigung des Werkstücks an der Haltevorrichtung. Vorteilhaft ist die Kraft zum Festhalten auf einen großen Bereich des Werkstücks verteilt. Die erfindungsgemäße Haltevorrichtung kann auch beim Stand der Technik als verbesserte Haltemöglichkeit für ein Werkstück eingesetzt bzw. angewendet werden.

Die genaue Ausbildung der geschlitzten Buchse ist an sich beliebig, solange durch die Relativbewegung zwischen Halteelement und Befestigungsvorrichtung eine Verspannung des Werkstücks an der Haltevorrichtung erfolgt. Bevorzugt ist aber vorgesehen, dass die geschlitzte Buchse um eine Längsachse teilringförmig mit einem, vorzugsweise axial ausgerichteten, Schlitz ausgebildet ist. Der Schlitz dient dabei vor allem dazu, dass beim Verspannen eine Verengung der geschlitzten Buchse erfolgt und dadurch das Werkstück an der Haltevorrichtung festgeklemmt wird.

Besonders bevorzugt ist für die geschlitzte Buchse vorgesehen, dass die Spannfläche der geschlitzten Buchse an das Werkstück anlegbar ist und die Spannfläche eine erste, einem losen Zustand der geschlitzten Buchse entsprechende lichte Weite aufweist, wobei durch die Relativbewegung der Befestigungsvorrichtung zum Halteelement unter Verengung des Schlitzes die Spannfläche auf eine zweiten, einem verspannten Zustand der geschlitzten Buchse entsprechende lichte Weite verringerbar ist. Vor allem wenn die geschlitzte Buchse auf Basis eines Kreiszylinders ausgebildet ist, lässt sich die Verengung der geschlitzten Buchse auch über den Innendurchmesser anstatt über die lichte Weite definieren.

Durch das Bewegen entlang der Führungs- bzw. Keilflächen sind die oftmals vorhandenen Spiele zwischen Halteelement, Befestigungsvorrichtung und Werkstück besser ausgleichbar. D. h., wenn es kleine Unterschiede in den konkreten Abmessungen der beteiligten Komponenten gibt, ist durch die Befestigung bzw. Verkeilung dennoch immer ein sicherer und stabiler Halt der Befestigungsvorrichtung am Halteelement und somit des Werkstücks an der Haltevorrichtung garantiert.

Hinsichtlich der Ausgestaltung und Anordnung der geschlitzten Buchse sind in dieser Anmeldung zwei unterschiedliche Ausführungsbeispiele im Detail erläutert. Gemäß einem ersten Ausführungsbeispiel ist vorgesehen, dass die geschlitzte Buchse gesondert vom Halteelement als Teil der Befestigungsvorrichtung ausgebildet ist. Gemäß einem zweiten Ausführungsbeispiel - welches weiter unten näher erläutert wird - ist die geschlitzte Buchse einstückig mit dem Halteelement ausgebildet ist. Im Folgenden wird das erste Ausführungsbeispiel näher erläutert.

In Bezug auf das erste Ausführungsbeispiel ist die exakte Ausgestaltung der Führungs- bzw. Keilflächen an sich beliebig. Beispielsweise können die Führungs- bzw. Keilflächen als Ebenen ausgebildet sein. Bevorzugt ist allerdings vorgesehen, dass die Führungs- bzw. Keilflächen zumindest teilweise konusförmig ausgebildet sind. Mit anderen Worten bedeutet konusförmig, dass die Führungs- bzw. Keilflächen zumindest teilweise kegelmantelförmig ausgebildet sind. Dadurch ist neben der reinen Verkeilung auch eine Zentrierung möglich.

Weiters ist bevorzugt vorgesehen, dass die Führungs- bzw. Keilfläche des Halteelements durch eine zumindest teilweise konusförmige Innenfläche des Halteelements gebildet ist. Somit bildet das Halteelement eine äußere Komponente der Haltevorrichtung, wobei eben die Innenfläche die Führungs- bzw. Keilfläche bildet. Dazu passend ist auch bevorzugt vorgesehen, dass die Führungs- bzw. Keilfläche der Befestigungsvorrichtung durch eine zumindest teilweise konusförmige Außenfläche der Befestigungsvorrichtung gebildet ist. Somit bildet die Befestigungsvorrichtung eine innere Komponente der Haltevorrichtung.

Für die Verbindung zwischen der Befestigungsvorrichtung und dem Halteelement ist grundsätzlich eine rein lineare Bewegung ausreichend. Es kann auch zusätzlich noch bei der Relativbewegung eine Drehkomponente dabei sein. Es genügt also, dass ein Zahntechniker von Hand das Halteelement, die Befestigungsvorrichtung und das dentale Werkstück positioniert und durch Einschieben bzw. Verschieben der Befestigungsvorrichtung zum Haltelement ein Verkeilen erfolgt, wodurch gleichzeitig das dentale Werkstück an der Haltevorrichtung festgeklemmt wird. Bevorzugt ist allerdings vorgesehen, dass die Haltevorrichtung selbst noch zusätzliche Führungskomponenten aufweist, sodass die Relativbewegung für die Befestigung geführt erfolgen kann.

Gemäß einem bevorzugten Ausführungsbeispiel ist deshalb vorgesehen, dass im Halteelement zumindest eine, vorzugsweise zumindest teilweise gewindeförmige, Führung ausgebildet ist und dass die Befestigungsvorrichtung zumindest eine in die Führung eingreifende Nase aufweist, wobei sich durch Verdrehen der Befestigungsvorrichtung bei in die Führung eingreifender Nase die Führungs- bzw. Keilflächen der Befestigungsvorrichtung und des Halteelements zueinander in axialer Richtung bewegen und verkeilen. Auch eine umgekehrte Ausführung (Führung in Befestigungsvorrichtung und Nase an Halteelement) ist denkbar.

Weiters ist bevorzugt vorgesehen, dass die Führungs- bzw. Keilfläche des Halteelements eine Ausnehmung im Halteelement begrenzt und die Ausnehmung eine Breitseite und eine Schmalseite ausbildet, wobei der Maximaldurchmesser der Ausnehmung auf der Breitseite größer ist als der Maximaldurchmesser der Ausnehmung auf der Schmalseite.

Um die axiale Relativbewegung für die Befestigung bzw. Verkeilung zu veranlassen, ist bevorzugt vorgesehen, dass die Führung eine Führungsoberfläche aufweist, die zu einer rechtwinkelig zur Längsachse ausgerichteten Querebene, vorzugsweise um einen Winkel von 2° bis 15°, geneigt ist. Um auch die gewünschte Richtung für die Relativbewegung zu erzeugen, ist bevorzugt vorgesehen, dass die Führungsoberfläche in Richtung Schmalseite geneigt ist.

Es ist an sich unerheblich, wo genau die Führung ausgebildet ist, solange die Nase in die Führung eingreifen kann. So kann die Führung durchaus im mittleren Bereich oder im Bereich der Breitseite ausgebildet sein. Gemäß einer bevorzugten Ausführungsvariante ist allerdings vorgesehen, dass die Führung im Bereich der Schmalseite der Ausnehmung im Halteelement ausgebildet ist.

Um beim Zusammensetzen der Befestigungsvorrichtung mit dem Halteelement eine passende Positionierung garantieren zu können, ist bevorzugt vorgesehen, dass im Halteelement zumindest eine axial ausgerichtete, die Innenfläche mitbildende und mit der zumindest einen Nase korrespondierende Nut ausgebildet ist. Im Speziellen erfolgt dabei die Positionierung dadurch, dass die Befestigungsvorrichtung über die in die Nut eingreifende Nase am Halteelement geführt ist, wodurch bei der Relativbewegung die Befestigungsvorrichtung entlang der Nut linear axial bewegbar ist.

Für eine benutzerfreundliche und intuitive Positionierung und Befestigung ist bevorzugt vorgesehen, dass die Nut und die Führung ineinander übergehen. Dabei kann die Nut und die Führung durch Zusammenwirken mit der Nase der Befestigungsvorrichtung die Relativbewegung in Form einer bajonettverschlussartigen Befestigungsbewegung für die Befestigungsvorrichtung am Halteelement vorgeben.

Neben dem Halteelement und der Befestigungsvorrichtung kann die Haltevorrichtung gemäß dem ersten Ausführungsbeispiel auch ein Werkzeug zum Durchführen der Relativbewegung der Befestigungsvorrichtung zum Halteelement aufweisen. Somit muss der Zahntechniker nicht nur mit seinen Händen alleine die beiden Komponenten Halteelement und Befestigungsvorrichtung verbinden. Bevorzugt ist hier vorgesehen, dass das Werkzeug Verbindungselemente zum formschlüssigen Verbinden mit der Befestigungsvorrichtung aufweist, wobei durch das Werkzeug die Befestigungsvorrichtung relativ zum Halteelement zumindest verdrehbar ist. Entsprechend können in der Befestigungsvorrichtung passende Verbindungsgegenstücke zu den Verbindungselementen des Werkzeugs vorgesehen sein.

Beim zweiten Ausführungsbeispiel - bei welchem die geschlitzte Buchse Teil des Halteelements ist - ist bevorzugt vorgesehen, dass die Befestigungsvorrichtung zumindest eine Klammer mit zwei voneinander beabstandeten Klammerflächen - welche der Führungs- bzw. Keilfläche der Befestigungsvorrichtung entsprechen - aufweist, wobei die Klammerflächen der Befestigungsvorrichtung auf im Bereich des Schlitzes von der Spannfläche abgewandt angeordnete, voneinander beabstandete Klammergegenflächen - welche der Führungs- bzw. Keilfläche des Halteelements entsprechen - anlegbar sind.

Um auf einfache Art und Weise die Befestigung bzw. Verkeilung zwischen Halteelement und Befestigungsvorrichtung zu ermöglichen, ist bevorzugt vorgesehen, dass die voneinander beabstandeten Klammerflächen einen Mindestabstand zueinander aufweisen, welcher geringer ist als der Abstand zwischen den Klammergegenflächen im losen Zustand der geschlitzten Buchse.

Um überhaupt das Verbinden zwischen Halteelement und Befestigungsvorrichtung zu ermöglichen, sind an den Klammerflächen der Befestigungsvorrichtung - vorzugsweise schräg ausgerichtete - Führungsabschnitte ausgebildet. Hierzu ist bevorzugt vorgesehen, dass durch die Relativbewegung der Klammer zum Halteelement durch den an den Klammergegenflächen anliegenden Führungsabschnitt die Klammergegenflächen zueinander bewegbar sind, sodass unter Verengung des Schlitzes die Spannfläche auf den zweiten, dem verspannten Zustand der geschlitzten Buchse entsprechenden Innendurchmesser verringerbar ist, in welchem der Mindestabstand der Klammerflächen zueinander gleich groß ist wie der Abstand zwischen den Klammergegenflächen.

Bevorzugt ist weiters vorgesehen, dass an der Haltevorrichtung mehrere separate Werkstücke über jeweilige geschlitzte Buchsen verspannbar sind. Hier kann pro geschlitzter Buchse eine zugehörige Klammer vorgesehen sein. Anders ausgedrückt weist die Befestigungsvorrichtung zumindest zwei, vorzugsweise regelmäßig zueinander angeordnete, Klammern auf, wobei jede Klammer jeweils mit einer von zumindest zwei, im Halteelement ausgebildeten geschlitzten Buchse korrespondiert.

Um auch mehrere Werkstücke möglichst rasch festzuspannen, ist besonders bevorzugt vorgesehen, dass die mehrere Klammern aufweisende Befestigungsvorrichtung einstückig ausgebildet ist. Somit können durch die Relativbewegung dieser einzigen, einstückigen Befestigungsvorrichtung mehrere Werkstücke gleichzeitig an der Haltevorrichtung verspannt werden. Bevorzugt ist die Befestigungsvorrichtung dazu sternförmig ausgebildet.

Der Schutzbereich der Haltevorrichtung gemäß Anspruch 1 bezieht sich nur auf die zumindest zweiteilige Haltevorrichtung an sich. Es kann aber durchaus auch vorgesehen sein, dass im Lieferumfang auch zumindest ein Werkstück, vorzugsweise eine Vielzahl von vorgefertigten Werkstücken, enthalten ist. Deswegen wird auch Schutz begehrt für ein Set mit einer erfindungsgemäßen Haltevorrichtung und zumindest einem dentalen Werkstück. Dieses Werkstück kann dabei unterschiedlichste Formen aufweisen. Für eine einfache Herstellung und Halterung ist das Werkstück in Form eines geraden Kreiszylinders ausgebildet.

Schutz wird zudem begehrt für eine Bearbeitungsmaschine, insbesondere eine CNC-Maschine, mit einem Bearbeitungswerkzeug und einer erfindungsgemäßen Haltevorrichtung für ein Werkstück. Um ein Bewegen des eingespannten bzw. festgeklemmten Werkstücks zu ermöglichen, ist bevorzugt vorgesehen, dass die Bearbeitungsmaschine eine bewegbare, vorzugsweise kardangelenkartig ausgebildete, Positioniervorrichtung aufweist, wobei die Haltevorrichtung an der Positioniervorrichtung lösbar befestigbar ist. Mit dieser Bearbeitungsmaschine kann dann über das Bearbeitungswerkzeug das Werkstück in einem Dentalwerkstück-Produktionsmodus bearbeitet werden. Um nicht nur Schutz für die konkrete Haltevorrichtung zu erlangen, wird auch Schutz für ein Verfahren zur Herstellung einer erfindungsgemäßen Haltevorrichtung in einer Bearbeitungsmaschine, insbesondere in einer CNC-Maschine, gemäß Anspruch 11 begehrt. Dieses Verfahren kann in derselben Bearbeitungsmaschine erfolgen, in der auch die Bearbeitung des Werkstücks erfolgt. Hier ist besonders bevorzugt vorgesehen, dass in einem Haltevorrichtung-Produktionsmodus der Bearbeitungsmaschine aus in die Bearbeitungsmaschine eingespannten Werkstücken das Halteelement und die Befestigungsvorrichtung der Haltevorrichtung herstellbar, vorzugsweise fräsbar, sind. Dies erfolgt bevorzugt dadurch, dass der Haltevorrichtung-Produktionsmodus auf Basis von in einem Speicher hinterlegten und von der Bearbeitungsmaschine lesbaren und ausführbaren Daten des Halteelements und der Befestigungsvorrichtung durchgeführt wird.

Schutz wird auch für die Bearbeitungsmaschine mit einer erfindungsgemäßen Haltevorrichtung gemäß Anspruch 9 begehrt. Nichterfindungsgemäß wird eine Bearbeitungsmaschine zum Durchführen des Herstellungsverfahrens einer Haltevorrichtung offenbart. Dabei ist vorgesehen, dass von einer Steuer- oder Regeleinheit ein Haltevorrichtung-Produktionsmodus ausführbar ist und in einem Speicher der Steuer- oder Regeleinheit der Bearbeitungsmaschine Daten zur Ausführung des Haltevorrichtung-Produktionsmodus gespeichert sind, wobei der Haltevorrichtung-Produktionsmodus durch Eingabe eines Codes freischaltbar ist. Somit kann bei zukünftigen Auslieferungen von Bearbeitungsmaschinen der entsprechende Haltevorrichtung-Produktionsmodus bereits in der Bearbeitungsmaschine hinterlegt sein. Wenn der Besitzer bzw. Käufer dieser Bearbeitungsmaschine dann auch die eigene Produktion der erfindungsgemäßen Haltevorrichtung wünscht, kann er sich den entsprechenden Haltevorrichtung-Produktionsmodus freischalten lassen.

Alternativ ist es aber auch denkbar, dass ein Käufer seine bereits vorhandene Bearbeitungsmaschine mit einem Haltevorrichtung-Produktionsmodus nachrüstet. Deswegen wird auch Schutz für einen Datenträger gemäß Anspruch 13 begehrt, auf dem das erfindungsgemäße Herstellungsverfahren in Form von, von einer Bearbeitungsmaschine lesbaren und als Haltevorrichtung-Produktionsmodus zur Herstellung der Haltevorrichtung ausführbaren Daten gespeichert ist. Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1a bis 1c: unterschiedliche Ausführungsvarianten eines dentalen Werkstückes,
- Fig. 2: schematisch den Schnitt durch ein erstes Ausführungsbeispiel einer Haltevorrichtung,
- Fig. 3a und 3b: unterschiedliche Ansichten einer Befestigungsvorrichtung,
- Fig. 4a bis 4c: unterschiedliche Ansichten einer Haltevorrichtung bei Betrachtung von der Schmalseite,
- Fig. 5a bis 5d: unterschiedliche Ansichten der Haltevorrichtung bei Betrachtung von der Breitseite,
- Fig. 6a bis 6d: die Haltevorrichtung in losem Zustand der geschlitzten Buchse,
- Fig. 7a bis 7d: die Haltevorrichtung in verspanntem Zustand der geschitzten Buchse,
- Fig. 8a bis 8e: diverse Ansichten eines Werkzeugs,
- Fig. 9a und 9b,: Ansichten eines zweiten Ausführungsbeispiels einer Haltevorrichtung,
- Fig. 10a und 10b: Ansichten der Befestigungsvorrichtung,
- Fig. 11a und 11b: Ansichten des Werkstücks,
- Fig. 12a bis 12c: Ansichten der Haltevorrichtung bei verspannter geschlitzter Buchse,
- Fig. 13a und 13b: schematisch den Unterschied zwischen loser und verspannter geschlitzter Buchse,
- Fig. 14a bis 17c: Ansichten einer weiteren Variante des zweiten Ausführungsbeispiels,
- Fig. 18a: eine Bearbeitungsmaschine mit einer schematisch dargestellten Steuer- oder Regeleinheit,
- Fig. 18b: das Detail der Positioniervorrichtung aus Fig. 18a und
- Fig. 19a und 19b: die Bearbeitungsmaschine mit einer Haltevorrichtung gemäß dem zweiten Ausführungsbeispiel.

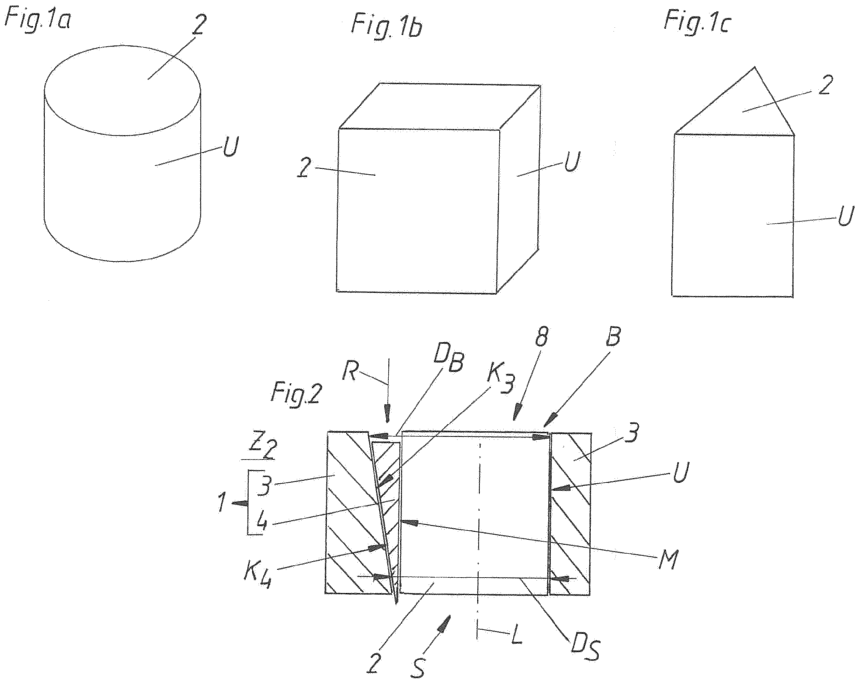

Die grundsätzliche Idee der vorliegenden Erfindung basiert auf der Befestigung von geometrisch einfachen dentalen Werkstücken 2. Diese dentalen Werkstücke 2 sind bevorzugt aus Zirkondioxid hergestellt. Es können aber auch andere Materialien wie beispielsweise Kunststoffe, Sintermetalle, Mischmaterialien usw. verwendet werden. Eine bevorzugte Variante eines solchen Zirkonblockes bzw. dentalen Werkstückes 2 ist in Fig. 1a dargestellt, demgemäß das dentale Werkstück 2 kreiszylinderförmig ausgebildet ist und keine weiteren Abstufungen oder Ausbuchtungen aufweist, über welche das dentale Werkstück 2 aufliegt oder welche eine Befestigung ermöglichen würden. Die Fixierung an einer Haltevorrichtung 1 erfolgt dadurch rein kraftschlüssig. Diese kraftschlüssige Verbindung erfolgt über die Mantelfläche U des dentalen Werkstücks 2. In den Fig. 1b und 1c sind noch alternative Ausführungsmöglichkeiten des dentalen Werkstückes 2 auf Basis einer rechteckigen Grundfläche oder einer dreieckigen Grundfläche dargestellt.

Fig. 2 veranschaulicht schematisch die Befestigung eines dentalen Werkstückes 2 an einer Haltevorrichtung 1. Die Haltevorrichtung 1 weist dazu zwei Bauteile auf, nämlich das Halteelement 3 und die Befestigungsvorrichtung 4. Bei der Befestigung wird zunächst das Werkstück 2 in die im Halteelement 3 ausgebildete Ausnehmung 8 eingeführt. Gleichzeitig wird auch die Befestigungsvorrichtung 4 vorpositioniert. In diesem Fall gemäß Fig. 2 ist die Befestigungsvorrichtung 4 im Schnitt als einfacher Keil ausgebildet. Dabei weist die Befestigungsvorrichtung 4 eine Führungs- bzw. Keilfläche K₄ auf, die mit der die Innenfläche des Halteelements 3 bildende Führungs- bzw. Keilfläche K₃ korrespondiert. Durch diese Führungs- bzw. Keilfläche K₃ des Halteelements 3 ergibt sich, dass der Maximaldurchmesser D_{B} der Ausnehmung 8 auf der Breitseite B des Halteelements 3 größer ist als der Maximaldurchmesser D_{S} der Ausnehmung 8 auf der Schmalseite S. Mithin verjüngt sich die Ausnehmung 8 von der Breitseite B hin zur Schmalseite S (dies entspricht dem ersten Ausführungsbeispiel). Durch eine Relativbewegung R der Befestigungsvorrichtung 4 in Richtung der Längsachse L bewegen sich die Führungs- bzw. Keilflächen K₃ und K₄ aneinander, wodurch die Mantelfläche U des dentalen Werkstückes 2 zwischen der von der Führungs- bzw. Keilfläche K₄ abgewandten Spannfläche M der geschlitzten Buchse der Befestigungsvorrichtung 4 und dem Halteelement 3 verspannt bzw. eingeklemmt wird. In diesem Fall gemäß Fig. 2 erfolgt rechtsseitig ein direkter Kontakt zwischen dem Werkstück 2 und dem Halteelement 3. Es ist aber natürlich auch möglich - wie in späteren Ausführungsbeispielen noch dargestellt - dass die Befestigungsvorrichtung 4 teilringförmig (und somit auch rechtsseitig) um das dentale Werkstück 2 herum angeordnet bzw. ausgebildet ist. Die einfachste Funktionsvariante der Haltevorrichtung 1 ist aber in Fig. 2 veranschaulicht. Durch die Relativbewegung R der Befestigungsvorrichtung 4 in Pfeilrichtung gelangt somit das Werkstück 2 von einem losen Zustand Z₁ in einen verspannten Zustand, bei der sich die geschlitzte Buchse in einem befestigten bzw. verkeilten Zustand Z₂ an der Haltevorrichtung 1 befindet. In diesem verspannten Zustand Z₂ ist der Platz für das Dentalwerkstück 2 innerhalb der Haltevorrichtung 1 derart verengt, dass das Dentalwerkstück 2 an der Haltevorrichtung 1 verspannt ist und somit kraftschlüssig eingespannt bzw. gehalten ist.

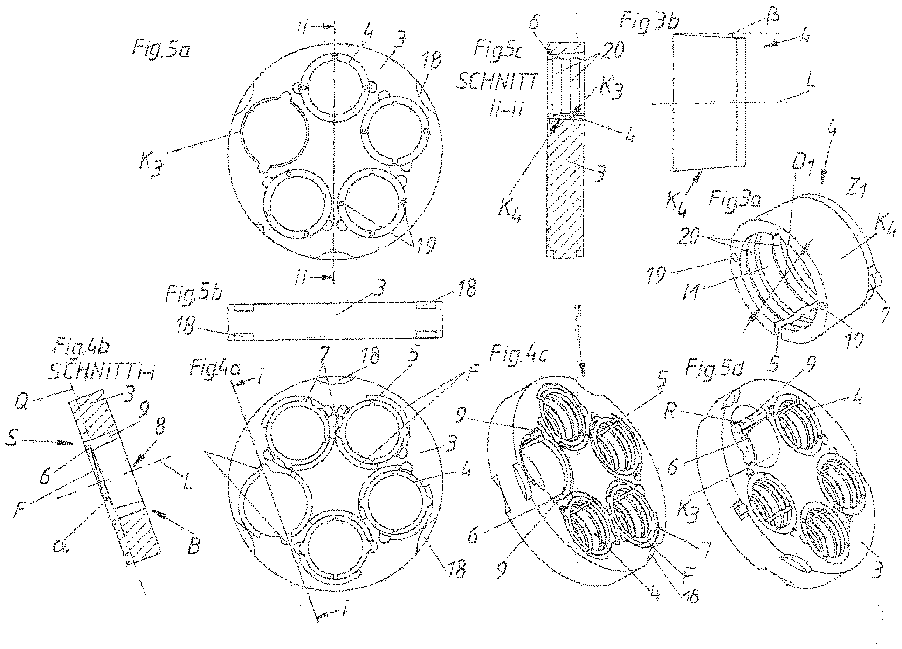

Die Fig. 3a bis 8e zeigen ein erstes Ausführungsbeispiel einer Haltevorrichtung 1. Gegenüber der Ausführung gemäß Fig. 2 ist in Fig. 3a erkennbar, dass die Befestigungsvorrichtung 4 teilringförmig ausgebildet ist und somit die geschlitzte Buchse bildet. Dazu weist die geschlitzte Buchse der Befestigungsvorrichtung 4 einen Schlitz 5 auf. Dieser Schlitz 5 muss auch nicht als Ausnehmung bzw. "Freiraum" ausgebildet sei, sondern kann auch mit einem nachgiebigen Material gefüllt sein. Auch muss dieser Schlitz 5 nicht genau in axialer Richtung ausgerichtet sein, sondern kann durchaus auch schräg und somit nicht parallel zur Längsachse L ausgerichtet sein. Bevorzugt ist allerdings dieser Schlitz 5 durchgehend und in axialer Richtung ausgerichtet. Die Befestigungsvorrichtung 4 weist an der Außenseite bzw. Außenfläche die Führungs- bzw. Keilfläche K₄ auf. An der Innenfläche der Befestigungsvorrichtung 4 ist die Spannfläche M ausgebildet. Diese kann grundsätzlich durchgehend flach bzw. eben ausgebildet sein, sodass sie im verspannten Zustand Z₂ durchgehend flächig bzw. bündig am Werkstück 2 anliegt. Im konkreten Ausführungsbeispiel gemäß Fig. 3a sind aber Vertiefungen 20 vorgesehen. Diese Vertiefungen 20 bzw. Eindrehungen sorgen für einen besseren Halt des dentalen Werkstückes 2. Diese Vertiefungen 20 können auch spiralförmig ausgebildet sein oder sonstige Formen aufweisen, welche dem Zweck der besseren Befestigung dienen.

Die Fig. 3b zeigt die Befestigungsvorrichtung 4 in einer Seitenansicht. Hier ist die konusförmige Ausbildung der Fühungs- bzw. Keilfläche K₄ besonders gut zu erkennen. Bevorzugt ist die Führungs- bzw. Keilfläche K₄ (wie auch die Führungs- bzw. Keilfläche K₃) um einen Winkel β zwischen 1° und 15°, vorzugsweise zwischen 2° und 10°, zur Längsachse L geneigt.

In Fig. 4a ist die Haltevorrichtung 1 mit Blick auf die Schmalseite S des Halteelements 3 dargestellt. Im Halteelement 3 sind insgesamt fünf Ausnehmungen 8 ausgebildet, die jeweils eine Innen-, Führungs- bzw. bzw. Keilfläche K₃ des Halteelements 3 bilden. Zudem sind in Fig. 4a die Führungsoberflächen F der Führung 6 ersichtlich. Diese korrespondieren mit den an der Befestigungsvorrichtung 4 ausgebildeten Nasen 7. Zudem sind die in axialer Richtung ausgerichteten Nuten 9 im Halteelement 3 erkennbar. Ebenfalls ersichtlich ist der Schlitz 5 jeder Befestigungsvorrichtung 4. An der Umrandung des Halteelements 3 sind die Spannflächen 18 regelmäßig angeordnet, über die eine lösbare Befestigung der gesamten Haltevorrichtung 1 an einer Positioniervorrichtung 15 einer Bearbeitungsmaschine 13 erfolgt.

Die Fig. 4b zeigt den Schnitt i-i durch die Haltevorrichtung 1 gemäß Fig. 4a. Es ist erkennbar, dass an der Schmalseite S des Halteelements 3 die Führung 6 ausgebildet ist. Die Führung 6 geht dabei in die Nut 9 über. Zudem ist die Führungsoberfläche F der Führung 6 erkennbar, die um den Winkel α zur rechtwinkelig zur Längsachse L ausgerichteten Querebene Q in Richtung der Schmalseite S geneigt ist. Daraus ergibt sich, dass - wenn die Nase 7 der Befestigungsvorrichtung 4 beim Drehen der Befestigungsvorrichtung 4 relativ zum Halteelement 3 an der Führungsoberfläche F anliegt - eine zwingende Relativbewegung R der Befestigungsvorrichtung 4 in Richtung der Längsachse L hin zur Schmalseite S erfolgt, wodurch die Führungs- bzw. Keilflächen K₃ und K₄ verkeilen.

Die Fig. 4c zeigt in einer perspektivischen Ansicht die Haltevorrichtung 1 wiederum von Blickrichtung Schmalseite S. Es ist erkennbar, dass sich die Befestigungsvorrichtungen 4 noch in losem Zustand Z₁ befinden. Eine leichte Verkeilung zwischen den Führungs- bzw. Keilflächen K₃ und K₄ kann allerdings bereits vorliegen. Diese reicht allerdings noch nicht aus, um ein in dieser Fig. 4c nicht dargestelltes dentales Werkstück 2 innerhalb der Befestigungsvorrichtung 4 ausreichend zu verklemmen.

Die Fig. 5a bis 5d zeigen dasselbe Ausführungsbeispiel sowie denselben Zustand Z₁ wie in den Fig. 4a bis 4c. In Fig. 5a ist aber das Halteelement 3 mitsamt der Befestigungsvorrichtung 4 von der Breitseite B her dargestellt. Von der Breitseite B sind auch die in der Befestigungsvorrichtung 4 ausgebildeten Verbindungsgegenstücke 19 für das später noch dargestellte Werkzeug 10 ersichtlich.

In Fig. 5b ist eine Seitenansicht des Halteelements 3 dargestellt, wobei die Spannflächen 18 gut erkennbar sind.

Die Fig. 5c zeigt den Schnitt ii-ii durch die Haltevorrichtung 1 gemäß Fig. 5a. Erkennbar sind die aneinander liegenden konusförmigen Führungs- bzw. Keilflächen K₃ und K₄ des Halteelements 3 bzw. der Befestigungsvorrichtung 4.

Die Fig. 5d zeigt eine perspektivische Ansicht der Haltevorrichtung 1 aus Blickrichtung Breitseite B. Gut erkennbar ist der Übergang von der axial ausgerichteten Nut 9 in die, leicht geneigt zur Querebene Q ausgerichtete Führung 6. Die Relativbewegung R der Befestigungsvorrichtung 4 zum Halteelement 3 wird in dieser Fig. 5d strichliert dargestellt, wobei diese zwangsweise Führung durch die mit der Nut 9 und der Führung 6 korrespondierenden Nase 7 der Befestigungsvorrichtung 4 erfolgt. Diese Relativbewegung R bildet eine bajonettverschlussartige Befestigungsbewegung für die Befestigungsvorrichtung 4 am Halteelement 3.

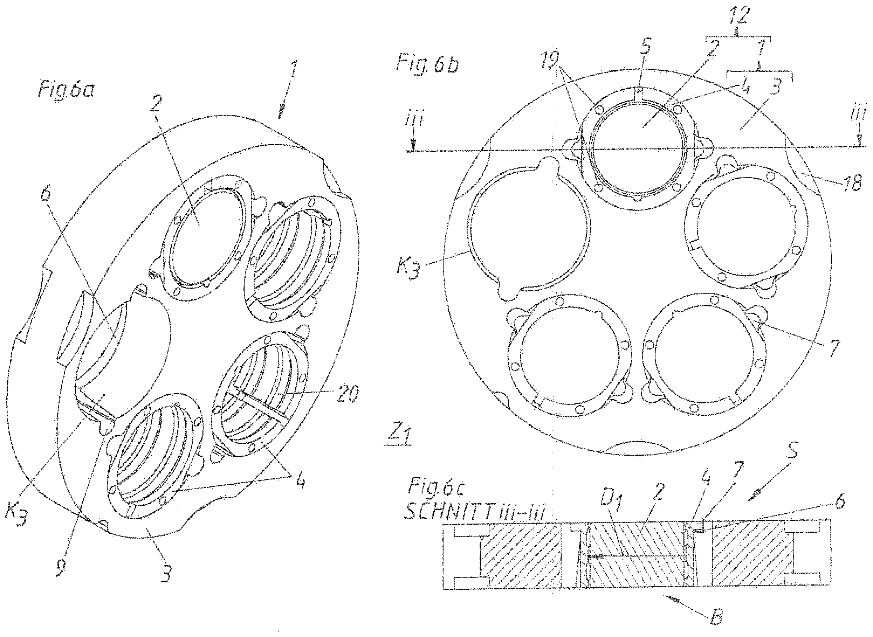

Die Fig. 6a zeigt die Haltevorrichtung 1 in einem losen Zustand Z₁ der Befestigungsvorrichtung 4. Dennoch ist bereits ein dentales Werkstück 2 in der Haltevorrichtung 1 angeordnet.

In Fig. 6b ist ersichtlich, dass der Schlitz 5 in der geschlitzten Buchse der Befestigungsvorrichtung 4 noch geöffnet ist. Dadurch liegt noch keine ausreichende Verklemmung zwischen dem dentalen Werkstück 2 und der Haltevorrichtung 1 vor. In Fig. 6b ist zudem veranschaulicht, dass die Haltevorrichtung 1 durch die Befestigungsvorrichtung 4 und durch das Halteelement 3 gebildet ist. Die Haltevorrichtung 1 wiederum bildet zusammen mit dem zumindest einen dentalen Werkstück 2 das Set 12.

In Fig. 6c ist der Schnitt iii-iii durch das Set 12 gemäß Fig. 6b dargestellt. Die an das Werkstück 2 anlegbare Spannfläche M der geschlitzten Buchse der Befestigungsvorrichtung 4 weist noch einen ersten, einem losen Zustand Z₁ der Befestigungsvorrichtung 4 entsprechenden Innendurchmesser D₁ auf.

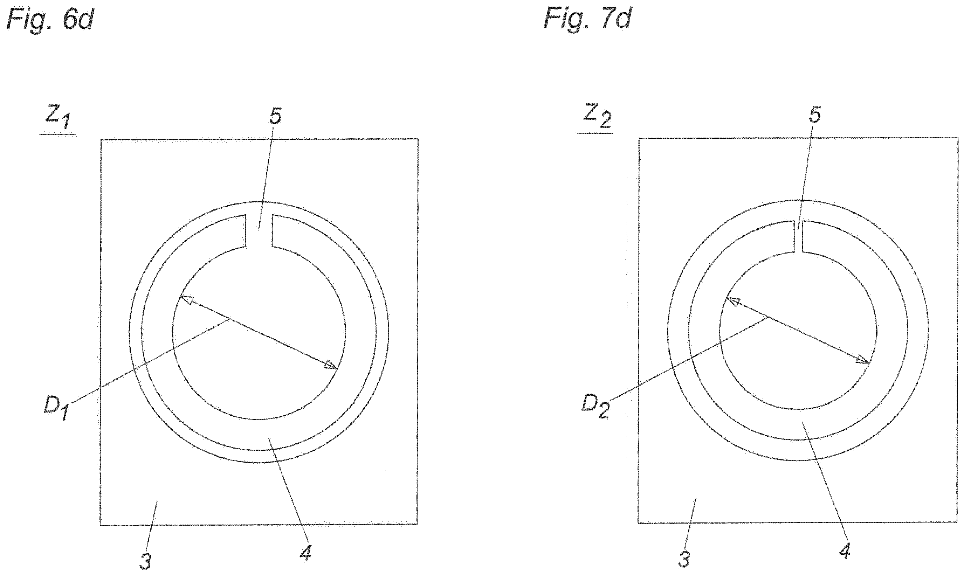

Auch aus Fig. 6d geht dieser größere Innendurchmesser D₁ bei noch offenem Schlitz 5 hervor.

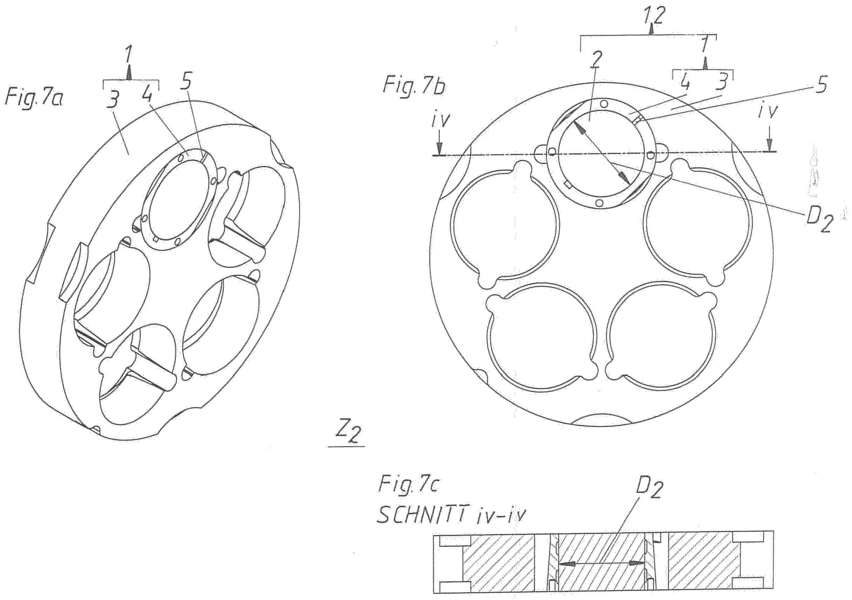

Demgegenüber zeigen die Fig. 7a bis 7d die Haltevorrichtung 1 bei verkeiltem Zustand Z₂ der Befestigungsvorrichtung 4 am Halteelement 3. Wie diesbezüglich aus Fig. 7a hervorgeht, hat sich der Schlitz 5 der geschlitzten Buchse der Befestigungsvorrichtung 4 bereits verengt, wodurch die Spannfläche M bündig an der Mantelfläche U des Werkstücks 2 anliegt. Auch aus Fig. 7b ist diese Verengung des Schlitzes 5 erkennbar, wodurch sich die Spannfläche M der Befestigungsvorrichtung 4 auf einen zweiten, einem verspannten Zustand Z₂ der geschlitzten Buchse der Befestigungsvorrichtung 4 entsprechenden Innendurchmesser D₂ verringert. Auch aus den Fig. 7c und 7d ist dieser verringerte zweite Innendurchmesser D₂ erkennbar. Vor allem aus einem Vergleich der Fig. 6d und 7d geht - schematisch und übertrieben dargestellt - die Durchmesserveränderung zwischen losem Zustand Z₁ und verspanntem Zustand Z₂ hervor.

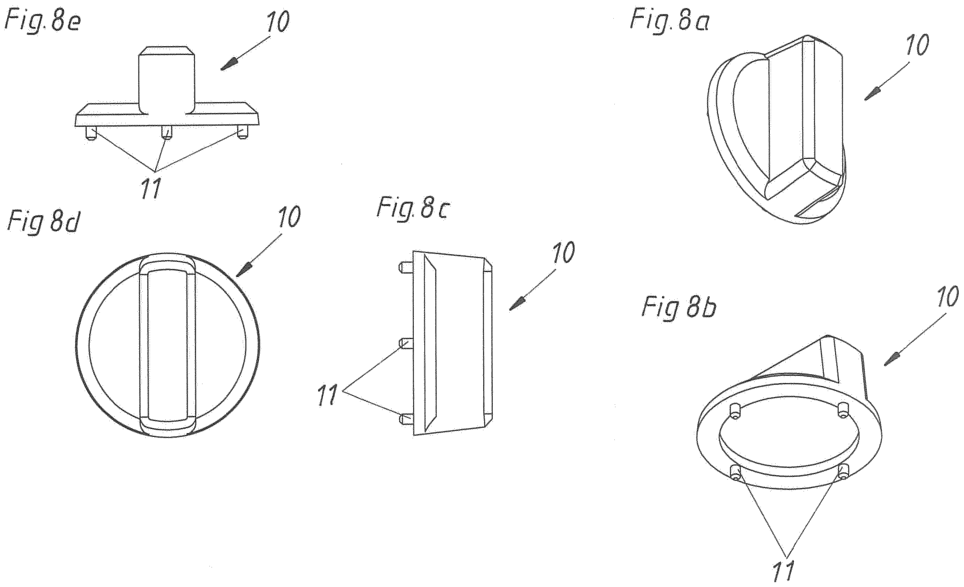

Die Fig. 8a bis 8e zeigen unterschiedliche Ansichten des Werkzeugs 10, welches die als Vorsprünge ausgebildeten Verbindungselemente 11 aufweist. Diese Verbindungselemente 11 korrespondieren mit den in der Befestigungsvorrichtung 4 ausgebildeten Verbindungsgegenstücken 19. Wenn ein solches Werkzeug 10 an einer Befestigungsvorrichtung 4 beispielsweise gemäß Fig. 6a angesetzt wird, so wird durch Drehen am Werkzeug 10 auch die Nase 7 entlang der Führungsoberfläche F der Führung 6 bewegt, sodass sich die Befestigungsvorrichtung 4 relativ zum Halteelement 3 in Richtung Schmalseite S bewegt und sich dadurch die Sapnnfläche M der Befestigungsvorrichtung 4 unter Einklemmung des dentalen Werkstücks 2 verengt.

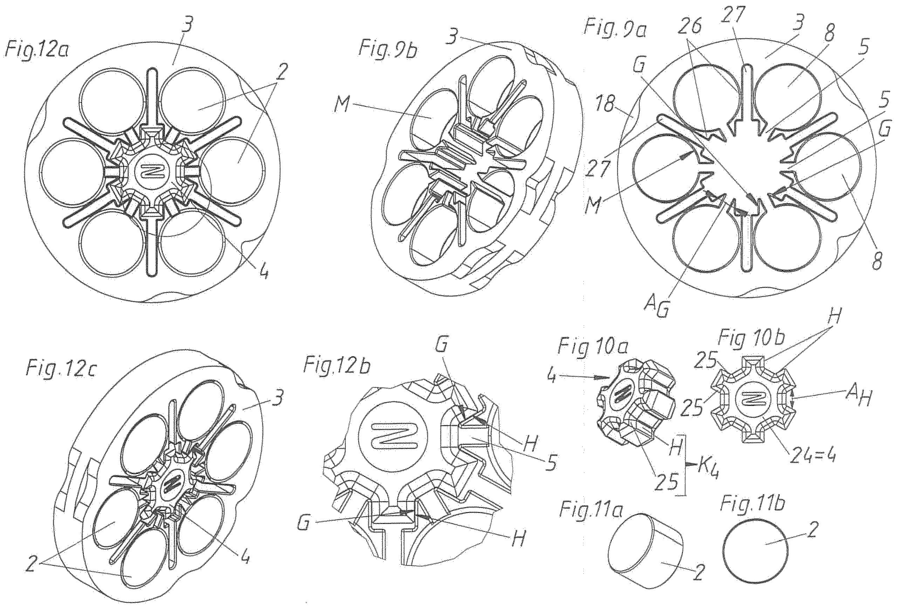

In den Fig. 9a bis 17c ist ein zweites Ausführungsbeispiel einer Haltevorrichtung 1 dargestellt. Bei diesem zweiten Ausführungsbeispiel ist die geschlitzte Buchse einstückig mit dem Halteelement 3 ausgebildet.

Gemäß Fig. 9a ist in der Draufsicht auf das Halteelement 3 erkennbar, dass die geschlitzte Buchse im Wesentlichen aus den beiden Bügeln 26 und dem Schlitz 5 besteht. In diesem Fall weist das Halteelement insgesamt sechs solche geschlitzte Buchsen mit jeweils zwei Bügeln 26 auf. Die Innenfläche jeder geschlitzten Buchse bildet eine Spannfläche M für das Werkstück 2. Eine gewisse Flexibilität der Bügel 26 wird durch die Ausnehmung 27 garantiert. An jedem Bügel 27 ist eine Klammergegenfläche G in einem zur Spannfläche M abgewandten Bereich ausgebildet. Im losen Zustand Z₁ der geschlitzten Buchse gemäß Fig. 9a sind die Klammergegenflächen G zweier Bügel 27 einer geschlitzten Buchse um den Abstand A_{G} voneinander beabstandet. In Fig. 9b ist dasselbe Halteelement 3 perspektivisch dargestellt.

Die Fig. 10a und 10b zeigen die Befestigungsvorrichtung 4, welche mehrere Klammern 24 mit jeweils zwei Klammerflächen H aufweist. Die insgesamt sechs Klammern 24 sind einstückig ausgebildet und bilden zusammen die Befestigungsvorrichtung 4. Die Klammerflächen H der Klammern 24 weisen einen Mindestabstand A_{H} zueinander auf. Die Klammerflächen H bilden zusammen mit den Führungsabschnitten 25 die Führungs- bzw. Keilflächen K₄ der Befestigungsvorrichtung 4. Diese Führungsabschnitte 25 sind als abgerundete bzw. abgeschrägte Kantenbereiche der Befestigungsvorrichtung 4 ausgebildet.

Die Fig. 11a und 11b zeigen ein Werkstück 2, welches an der Haltevorrichtung 1 verspannbar ist.

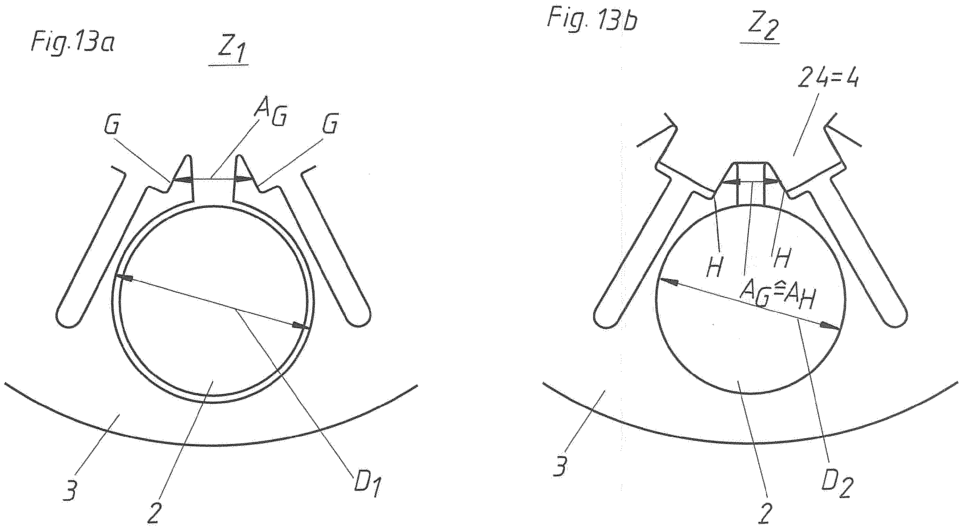

Das Verspannen eines Werkstücks 2 an der Haltevorrichtung 1 gemäß dem zweiten Ausführungsbeispiel erfolgt dadurch, dass zunächst in ein Halteelement 3 gemäß Fig. 9a die gewünschte Anzahl an Werkstücken 2 in die dafür vorgesehenen Ausnehmungen 8 eingesetzt werden. Da sich die geschlitzten Buchsen dieses Halteelements 3 noch im losen Zustand Z₁ befinden, ist das Einführen der Werkstücke 2 in die Ausnehmungen 8 problemlos möglich. Dieses Einsetzen des Werkstücks ist in Fig. 13a veranschaulicht, wobei der Abstand A_{G} zwischen den Klammergegenflächen G und somit die Größe des Schlitzes 5 übertrieben dargestellt ist. Es ist auch erkennbar, dass das Werkstück 2 das Halteelement 3 nicht (bzw. kaum) kontaktiert, da der Innendurchmesser D₁ im losen Zustand Z₁ noch größer ist.

Sobald die gewünschte Anzahl an Werkstücken 2 in das Halteelement 3 eingesetzt ist, wird die, vorzugsweise sternförmige, Befestigungsvorrichtung 4 in die Mitte des Halteelements 3 eingeführt. Zunächst kontaktieren dabei die Führungsabschnitte 25 die Klammergegenflächen G der geschlitzten Buchsen des Halteelements 3. Durch die Relativbewegung R der Befestigungsvorrichtung 4 in Richtung Längsachse L werden die Bügel 26 der geschlitzten Buchsen aufgrund der schräg ausgebildeten Führungsabschnitte 25 zueinander bewegt bis die Klammergegenflächen G die Klammerflächen H berühren. Dadurch entspricht der Abstand A_{G} zwischen den Klammergegenflächen G einer geschlitzten Buchse dem Mindestabstand A_{H} zwischen den Klammerflächen H, wie dies in Fig. 13b veranschaulicht ist. Da sich durch diese Relativbewegung R die Bügel 26 zueinander bewegen, verringert sich der Innendurchmesser D₂ der geschlitzten Buchse, wodurch das Werkstück 2 über die Mantelfläche U an der Spannfläche M der geschlitzten Buchse verspannt ist. In den Fig. 12a bis 12c ist der Zustand dargestellt, wenn insgesamt sechs Werkstücke 2 in einem Halteelement 3 über eine Befestigungsvorrichtung 4 verspannt sind. Besonders vorteilhaft bei dieser Ausgestaltung ist, dass durch eine einzige Relativbewegung R der Befestigungsvorrichtung 4 zum Halteelement 3 alle Werkstücke 2 gleichzeitig an der Haltevorrichtung 1 verspannbar sind. Es ist auch möglich, einige Ausnehmungen 8 freizulassen und auch zum Beispiel nur einziges Werkstück 2 in einem solchen Halteelement 3 zu fixieren.

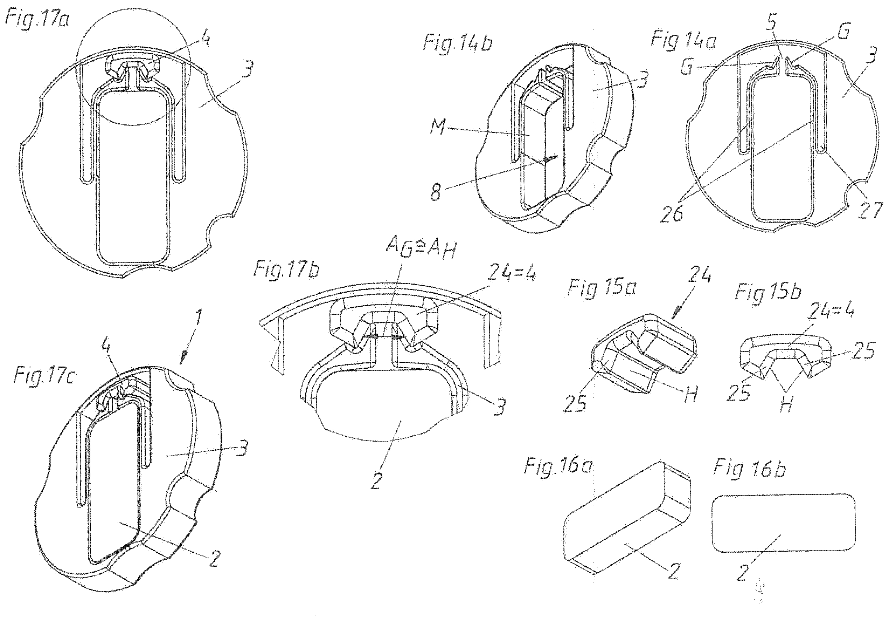

Die Fig. 14a bis 17c zeigen eine weitere Variante des zweiten Ausführungsbeispiels, wobei in diesem Halteelement 3 nur ein Werkstück 2 verspannbar ist. In gleicher Art und Weise wie bei der ersten Variante ist eine geschlitzte Buchse mit zwei Bügeln 26 samt Klammergegenflächen G vorgesehen (siehe Fig. 14a und 14b). Die Befestigungsvorrichtung 4 gemäß den Fig. 15a und 15b wird durch eine Klammer 24 mit zwei voneinander beabstandeten Klammerflächen H gebildet. Das Werkstück 2 weist eine rechteckförmige Grundfläche mit abgerundeten Seitenkanten auf. Sobald dieses Werkstück 2 in die Ausnehmung 8 im Halteelement 3 eingesetzt ist, wird die Befestigungsvorrichtung 4 (Klammer 24) wie in den Fig. 17a bis. 17c ersichtlich über die Führungsabschnitte 25 eingeschoben, bis sich die Klammerflächen H und die Klammergegenflächen G kontaktieren, wodurch die Spannfläche M das Werkstück 2 an der Haltevorrichtung 1 hält. In diesem Fall verringert sich nicht der gesamte Innendurchmesser der Spannfläche M sondern die Spannfläche M wird um das Ausmaß der Verkleinerung des Schlitzes 5 inniger an das Werkstück 2 gedrückt, wodurch dieses ausreichend fest an der Haltevorrichtung 1 festgespannt ist.

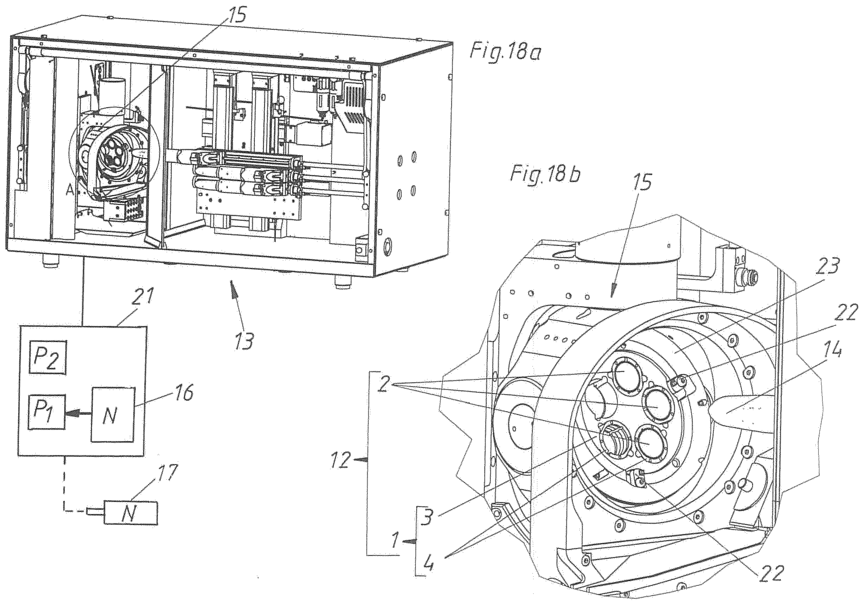

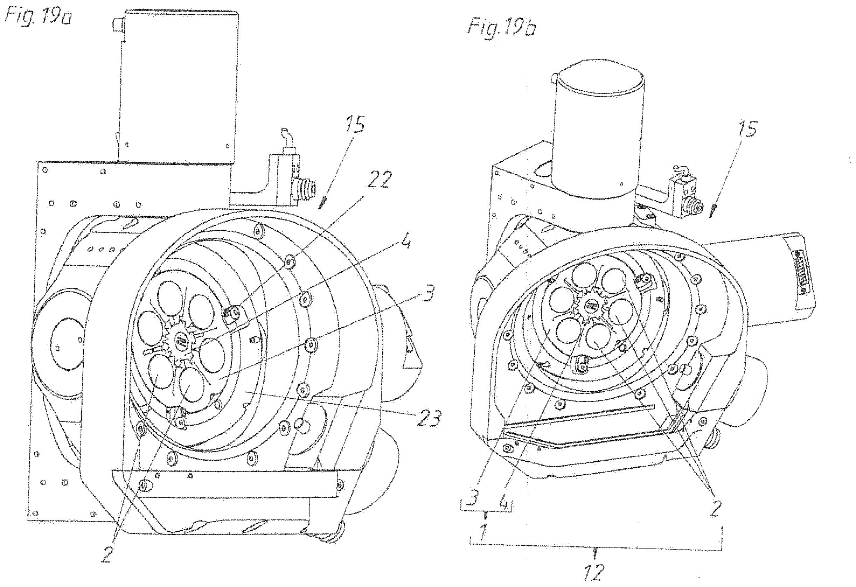

Die Fig. 18a zeigt eine Bearbeitungsmaschine 13 in Form einer CNC-Maschine. Diese CNC-Maschine weist gemäß dem Detailausschnitt von Fig. 18b eine Positioniervorrichtung 15 auf. Diese Positioniervorrichtung 15 kann mehrere kardangelenkartig angeordnete Komponenten aufweisen. Im Speziellen ist als innerste Baueinheit ein Haltering 23 vorgesehen, an welchem über die Befestigungsmittel 22 eine Haltevorrichtung 1 bzw. ein Set 12 lösbar befestigbar ist. Die über die Haltevorrichtung 1 an der Positioniervorrichtung 15 gehaltenen und von dieser Positioniervorrichtung 15 bewegbaren Dentalwerkstücke 2 können dann von dem Bearbeitungswerkzeug 14 bearbeitet bzw. gefräst werden. Dieser Bearbeitungsvorgang wird dabei über die in Fig. 18a schematisch dargestellte Steuer- oder Regeleinheit 21 gesteuert bzw. geregelt. Dazu ist von der Steuer- oder Regeleinheit 21 der Dentalwerkstück-Produktionsmodus P₂ ausführbar. Zudem ist aber auch möglich, dass von der Steuer- oder Regeleinheit 21 ein Haltevorrichtung-Produktionsmodus P₁ ausführbar ist. Dazu ist in einem Speicher 16 der Steuer- oder Regeleinheit 21 Daten N (vorzugsweise in Form von CNC-Files) gespeichert. Um nun in der Bearbeitungsmaschine 15 die Haltevorrichtung 1 selbst herzustellen, kann durch Eingabe eines Codes der Haltevorrichtung-Produktionsmodus P₁ freigeschaltet werden. Als alternative Variante ist es auch möglich, dass über einen Datenträger 17 (z. B. USB-Stick), auf dem die ausführbaren Daten N (CNC-Files) gespeichert sind, der Produktionsmodus P₁ auf eine bereits bestehende Bearbeitungsmaschine 13 nachrüstbar ist. Die Fig. 19a und 19b zeigen die Positioniervorrichtung 15 mit einer eingespannten Haltevorrichtung 1 gemäß dem zweiten Ausführungsbeispiel.

Die Erfindung lässt sich auch nochmals mit folgenden anderen Worten zusammenfassen und beschreiben:
Die Befestigungsvorrichtung 4 kann auch als konisches Gegenstück zum Halteelement 3 bzw. als Spannring bezeichnet werden. Dieser Spannring ist am besten in Fig. 3a erkennbar. Auf der Außenseite dieser Befestigungsvorrichtung 4 befindet sich die konische Fläche als Führungs- bzw. Keilfläche K₄, welche mit einer Ausfräsung bzw. Ausnehmung 8 des als Trägerplatte ausgebildeten Halteelements 3 korrespondiert. In der Mitte weist die Befestigungsvorrichtung 4 eine Bohrung bzw. Ausnehmung auf, welche nicht zwingend konzentrisch positioniert sein muss. Bevorzugt ist zusätzlich vorgesehen, dass an der Innenfläche dieser Befestigungsvorrichtung 4 Vertiefungen 20 bzw. Eindrehungen vorgesehen sind, welche später für einen besseren Halt des Dentalwerkstücks sorgen sollen. Die Befestigungsvorrichtung 4 weist bevorzugt zwei Nasen 7 auf, welche ein Zusammenfügen von Befestigungsvorrichtung 4 und Halteelement 3 nur in bestimmten Positionen ermöglichen, und zwar dann, wenn die Nasen 7 und die Nuten 9 genau übereinander liegen. Werden dann die zwei Teile zusammengefügt bis sich die konischen Flächen bzw. Keilflächen K₃ und K₄ kontaktieren, kommt ein weiteres Merkmal der Befestigungsvorrichtung 4 zu tragen. Diese Befestigungsvorrichtung 4 weist nämlich auf einer Seite eine Öffnung in Form eines Schlitzes 5 auf, welcher bevorzugt von der oberen bis zur unteren Kante reicht. Somit wird der Spannring (Befestigungsvorrichtung 4) umfangsmäßig geöffnet. Wird nun die Befestigungsvorrichtung 4 in der eingeführten Position mit Hilfe eines Schlüssels (Werkzeug 10), welcher in den Fig. 8a bis 8d dargestellt ist, über die Hilfsbohrungen (Verbindungsgegenstücke 19) verdreht, kommt es zu einer Umfangsreduzierung des Spannrings (Innendurchmesser D der Spannfläche M der Befestigungsvorrichtung 4 verkleinert sich). Dies erfolgt aus dem Grund, da die Nasen 7 der Befestigungsvorrichtung 4 über die spiralförmige Oberfläche (Führungsoberfläche F) des Halteelements 3 gleiten und somit diesen in Richtung der konischen Verjüngung ziehen. In Drehrichtung nimmt also der Abstand zwischen der Vorderseite des Halteelements 3 und der Oberfläche der Führung 6 zu. Um ein gleichmäßiges Anziehen zu ermöglichen, sind mindestens zwei Nasen 7 vorgesehen, welche bevorzugt genau gegenüberliegend ausgebildet sind. Es soll jedoch nicht ausgeschlossen sein, dass mehr Nasen 7, dazu passend auch Nuten 9 und Führungen 6 vorgesehen sind. Diese müssen auch nicht gleichmäßig auf dem Umfang verteilt sein. Dasselbe gilt für den Schlitz 5. Demgemäß zeigt die Fig. 3 nur eine bevorzugte Ausführungsvariante. So kann es gut möglich sein, dass der Schlitz 5 in Längsrichtung L die Befestigungsvorrichtung 4 einseitig umfangsmäßig nicht öffnet, dafür jedoch mehrere Schlitze 5 vorgesehen sind. Für eine solche Ausführungsvariante muss natürlich auch wieder das Halteelement 3 die nötigen konstruktiven Merkmale für ein einwandfreies Zusammenspiel aufweisen.

Ein weiterer wesentlicher Teil eines Sets 12 ist der Block (dentales Werkstück 2), welcher bevorzugt aus Zirkon besteht (siehe vor allem Fig. 1a). Die bevorzugte Ausführungsvariante ist ein zylindrischer Block ohne jegliche zusätzliche Materialentfernungen, wie z. B. dem Umfang entlanglaufende Nuten oder bereichsweise Ausbuchtungen. Dieser Block wird dann in die Bohrung des Spannringes (Befestigungsvorrichtung 4) eingeschoben. Dies kann zu dem Zeitpunkt erfolgen, wo der Spannring noch nicht in der Trägerplatte (Halteelement 3) angeordnet ist oder wenn der Spannring in der Trägerplatte positioniert ist aber noch nicht angezogen ist, weshalb es noch zu keiner Umfangsreduzierung gekommen ist. Gemäß Fig. 6a sieht man, wie das Werkstück 2 in der Befestigungsvorrichtung 4 eingeschoben ist und entlang des Umfanges zwischen Befestigungsvorrichtung 4 und Werkstück 2 noch Luft ist. Wird nun die Befestigungsvorrichtung 4 in eingeführter Position gedreht, verkleinert sich der Innendurchmesser D der Befestigungsvorrichtung 4 und legt sich um den, in diesem Fall Umfang, des dentalen Werkstückes 2. Dies ist aus Fig. 7c gut ersichtlich. Zudem ist deutlich ersichtlich, dass die durch den Konus erzeugte Druckkraft nur über gewisse Teile der Oberfläche der Befestigungsvorrichtung 4 auf das dentale Werkstück 2 übertragen wird. Dies sind jene Bereiche, welche keine Eindrehung oder Ähnliches aufweisen. Da durch Verdrehen der Befestigungsvorrichtung 4 immer eine ähnliche Druckkraft erzeugt wird, welche dann auf das dentale Werkstück 2 übertragen wird, kann man durch die Ausgestaltung der Eindrehungen die Effizienz der Haltevorrichtung 1 bestimmen. Sollte auf die Eindrehungen bzw. Vertiefungen 20 verzichtet werden, wird die Druckkraft gleichmäßig auf den gesamten Kontaktbereich verteilt. Somit ist die, wenn man nur einen kleine Teil der Oberfläche des dentalen Werkstücks 2 betrachtet, darauf wirkende Kraft relativ klein. Werden nun jedoch Eindrehungen bzw. Vertiefungen 20 vorgesehen, welche die Kontaktfläche auf die Hälfte reduzieren, so wird auch dieselbe Druckkraft, wie im vorhin genannten Fall, nun aber auf die halbe Fläche aufgeteilt. Betrachtet man nun wieder einen gleich großen Teil des dentalen Werkstückes 2 wie vorhin, welcher mit der Druckkraft beaufschlagt wird, so kommt es zu einer doppelt so großen Haltekraft. Bei einer gewissen Kraft kommt es aber unweigerlich zu einer Deformation des dentalen Werkstücks 2. Dies kann gewollt sein, jedoch aber auch ungewollt geschehen. Eine leichte Deformation begünstigt die Stabilität in axialer Richtung. Jedoch ist der nach einer Bearbeitung volumensmäßig reduzierte Block bereichsweise geschwächt und somit instabiler. Die in den Fig. 3 bis 13a angeführten Varianten beziehen sich immer auf einen kreiszylinderförmigen Block. Bei richtiger Dimensionierung und Ausführung lässt sich dieses Prinzip jedoch auf andere Blöcke (dentale Werkstücke 2) mit polygonförmigem Querschnitt übertragen (siehe Fig. 14a bis 17c).

Das Halteelement 3 besteht bevorzugt aus PMMA und die Befestigungsvorrichtung aus POM. Prinzipiell können jedoch auch jegliche andere Materialien verwendet werden, welche ebenfalls zur Erfüllung der Aufgabe geeignet sind. So kann das Halteelement 3 beispielsweise aus einem Edelstahl gefertigt werden und die Befestigungsvorrichtung 4 aus Aluminium. Bevorzugt ist das Material der Befestigungsvorrichtung 4 immer weicher und somit leichter verformbar als das Halteelement 3.

In Bezug auf Fig. 18a sei nochmals erläutert, dass einem Kunden die nötigen Bestandteile der Erfindung in Form einer Haltevorrichtung 1 zur Verfügung gestellt werden können. Es kann jedoch auch vorgesehen sein, dass man dem Kunden das Halteelement 3 und die Befestigungsvorrichtung 4 als reinen Rohling liefert, also ohne konische Oberflächen, herausgefräste Nasen usw. Sollte der Kunde bereits im Besitz einer Bearbeitungsmaschine 13 des Anmelders sein, ist es ihm dann möglich, diese Rohblöcke in der Bearbeitungsmaschine 13 einzuspannen und die erfindungsgemäßen Teile der Haltevorrichtung 1 eigenständig herzustellen. Dazu muss der Kunde dann nur den Datenträger 17 mit den Daten N (CNC-Files) und die Rohblöcke einkaufen bzw. den bereits in der Bearbeitungsmaschine 13 hinterlegten Haltevorrichtung-Produktionsmodus P₁ durch Eingabe eines zu kaufenden Codes freischalten lassen.

Beide Ausführungsbeispiele zeigen eine Haltevorrichtung 1, mit welcher Werkstücke 2 (Zirkonblöcke) kraftschlüssig festgespannt werden können. Dabei sind die dargestellten Möglichkeiten so ausgeführt, dass auf einen Großteil der Umfangsfläche (Mantelfläche U) die Spannkraft aufgebracht wird. Die Grundidee besteht darin, dass man als erstes die Blöcke (Werkstücke 2) in die Haltevorrichtung 1 einlegt. Dadurch, dass diese nachgiebig, vorzugsweise aus POM, gefertigt ist und eine relativ schmale geschlitzte Buchse aufweist, ist die Haltevorrichtung 1 dementsprechend flexibel und passt sich dann auch dem Rohling (Werkstück 2) an. Dies ist auch der Fall, sollte der Rohling geringfügig größer sein, als die Ausnehmung 8 der Haltevorrichtung 1.

Speziell in Hinblick auf das zweite Ausführungsbeispiel (siehe Fig. Fig. 9a bis. 13b) ist festzuhalten, dass der Spannkeil (Befestigungsvorrichtung 4 in Form der Klammer 24) eingefügt werden kann, sobald die Werkstücke 2 eingelegt sind. Der Spannkeil ist hierbei so ausgeführt, dass er auf der Ober- und Unterseite konisch zuläuft (Führungsabschnitt 25), damit er leichter eingedrückt werden kann. Das Eindrücken erfolgt hier lediglich über Handkraft. Je nachdem wie breit die abstehenden Zapfen sind bzw. wie klein der Mindestabstand A_{H} ist, ist die Spannkraft höher oder niedriger. Umso breiter sie sind, umso höher ist auch die Spannkraft, welche auf den Rohling ausgeübt wird. Bei dieser Ausführungsvariante sollte darauf geachtet werden, dass immer zwei Werkstücke 2 gegenüberliegend gespannt werden, da ansonsten der Spannmechanismus zu instabil ist. Wenn man nur ein Werkstück 2 spannen möchte, sollte man auf der Gegenseite einen "Blindstopfen" einfügen. Der Spannkeil wird bevorzugt aus PMMA gefertigt, da dieses Material gute Gleitfähigkeiten aufweist. Generell ist hierzu zu sagen, dass auch für jedes Teil andere Materialien verwendet werden können, welche den Zweck der Fixierung erfüllen. Die dargestellte Ausführung bietet Platz für sechs Rohlinge, wobei es auch mehr oder weniger sein können. Nach oben hin wird die Anzahl dann lediglich vom Platzbedarf eingeschränkt.

Bei der weiteren Variante (Fig. 14a bis 17c) des zweiten Ausführungsbeispiels weist der Rohling keine runde Form mehr auf, sondern eine im Wesentlichen quaderförmige Form. Es ist ersichtlich, dass der Spannmechanismus auf dem gleichen Prinzip beruht wie die erste Variante des zweiten Ausführungsbeispiels. In diesem Fall ist auf der dem Schlitz 5 abgewandten unteren Seite des Halteelements 3 eine fixe Führung/Anschlag für den Rohling vorgesehen. Auf der oberen Seite wird dann wieder die Spannkraft über den Spannkeil (Klammer 24) aufgebracht. Dabei weisen die Klammerflächen H des Spannkeil im Wesentlichen dieselbe Geometrie wie bei der ersten Variante auf. Dies bezieht sich natürlich auf diese signifikanten und funktionellen Bereiche des Keils. Auch bei dieser Variante wird wiederum der Block, bevorzugt Zirkonblock, in den Spannblock (Halteelement 3) eingelegt und dann der Spannkeil über Handkraft eingeschoben.

Beide Varianten des zweiten Ausführungsbeispiels sind so ausgelegt, dass der Rohling großflächig eingefasst ist und nur an einer Stelle (Schlitz 5) diese "Ummantelung" unterbrochen ist. Genau diese Stelle ist so ausgeführt, dass der Spannkeil die offene Stelle der Ummantelung versucht zu verkleinern und somit eine Umfangskraft auf den Rohling ausgeübt wird. Ein weiterer Vorteil hierbei ist, dass der Keil nicht direkt mit dem Rohling in Berührung kommt und keine Werkzeuge zur Spannung erforderlich sind. Somit ist dieses System sehr anwenderfreundlich.

Im Idealfall haben die Rohlinge (Werkstücke 2) dieselbe Höhe wie der Spannmechanismus (Haltevorrichtung 1), somit kann man bei der Anwendung alle Komponenten einfach auf einen Tisch legen und alles zusammendrücken. Sollten die Rohlinge niedriger oder höher sein, kann eine Distanzscheibe untergelegt werden, um eine mittige Position des Rohlings im Spannblock zu ermöglichen.

Das gesamte Set 12 kann dann in ein Frässystem (Bearbeitungsmaschine 13) eingespannt werden. Je nachdem ob Einzelarbeiten oder mehrgliedrige dentale Arbeiten angefertigt werden sollen, kann zwischen den unterschiedlichen Varianten gewählt werden.

### Bezugszeichenliste:

- 1: Haltevorrichtung (Spannblock bzw. Spannmechanismus)
- 2: Werkstück (Rohling)
- 3: Halteelement (Halterahmen bzw. Trägerplatte)
- 4: Befestigungsvorrichtung (Spannkeil)
- 5: Schlitz
- 6: Führung
- 7: Nase
- 8: Ausnehmung
- 9: Nut
- 10: Werkzeug
- 11: Verbindungselemente
- 12: Set
- 13: Bearbeitungsmaschine
- 14: Bearbeitungswerkzeug
- 15: Positioniervorrichtung
- 16: Speicher
- 17: Datenträger
- 18: Spannflächen
- 19: Verbindungsgegenstücke
- 20: Vertiefungen
- 21: Steuer- oder Regeleinheit
- 22: Befestigungsmittel
- 23: Haltering
- 24: Klammer
- 25: Führungsabschnitt
- 26: Bügel
- 27: Ausnehmung
- R: Relativbewegung
- K₃: Führungs- bzw. Keilfläche am Halteelement
- K₄: Führungs- bzw. Keilfläche an Befestigungsvorrichtung
- L: Längsachse
- M: Spannfläche
- Z₁: loser Zustand
- Z₂: verkeilter Zustand
- D: Durchmesser der Spannfläche
- D₁: Innendurchmesser bei losem Zustand
- D₂: Innendurchmesser bei verkeiltem Zustand
- F: Führungsoberfläche
- Q: Querebene
- α: Winkel der Führungsoberfläche
- β: Winkel der Führungs- bzw. Keilflächen
- B: Breitseite
- S: Schmalseite
- D_{B}: Maximaldurchmesser Breitseite
- D_{B}: Maximaldurchmesser Schmalseite
- P₁: Haltevorrichtung-Produktionsmodus
- P₂: Dentalwerkstück-Produktionsmodus
- N: Daten
- U: Mantelfläche
- H: Klammerflächen
- G: Klammergegenflächen
- A_{H}: Mindestabstand der Klammerflächen
- A_{G}: Abstand der Klammergegenflächen

## Patentansprüche

1. Haltevorrichtung (1) für ein, insbesondere dentales, Werkstück (2), mit einem Halteelement (3) und einer Befestigungsvorrichtung (4), wobei das Werkstück (2) durch eine Relativbewegung (R) der Befestigungsvorrichtung (4) zum Halteelement (3) an der Haltevorrichtung (1) befestigbar ist, wobei das Halteelement (3) und die Befestigungsvorrichtung (4) miteinander korrespondierende Keilflächen (K₃, K₄) aufweisen und durch die Relativbewegung (R) der Befestigungsvorrichtung (4) zum Halteelement (3) über die aneinander anliegenden Keilflächen (K₃, K₄) die Befestigungsvorrichtung (4) am Halteelement (3) befestigbar ist und wobei die Befestigungsvorrichtung (4) oder das Halteelement (3) eine geschlitzte Buchse mit einem sich in Längsrichtung (L) erstreckenden Schlitz (5) aufweist, wobei die Innenfläche der geschlitzten Buchse eine Spannfläche (M) für das Werkstück (2) bildet und wobei bei der Relativbewegung (R) der Befestigungsvorrichtung (4) zum Halteelement (3) das Werkstück (2) über die Spannfläche (M) an der Haltevorrichtung (1) verspannbar ist, **dadurch gekennzeichnet, dass** der Schlitz (5) in Längsrichtung (L) von einer oberen Kante bis zu einer unteren Kante der Befestigungsvorrichtung (4) oder des Halteelements (3) reicht, wobei der Schlitz (5) als Ausnehmung ausgebildet ist oder mit einem nachgiebigen Material gefüllt ist.

2. Haltevorrichtung nach Anspruch 1, **dadurch gekennzeichnet, dass** die geschlitzte Buchse um eine Längsachse (L) teilringförmig mit dem, vorzugsweise axial ausgerichteten, Schlitz (5) ausgebildet ist.

3. Haltevorrichtung nach Anspruch 2, **dadurch gekennzeichnet, dass** die Spannfläche (M) der geschlitzten Buchse an das Werkstück (2) anlegbar ist und die Spannfläche (M) einen ersten, einem losen Zustand (Z₁) der geschlitzten Buchse entsprechenden Innendurchmesser (D₁) aufweist, wobei durch die Relativbewegung (R) der Befestigungsvorrichtung (4) zum Halteelement (3) unter Verengung des Schlitzes (5) die Spannfläche (M) auf einen zweiten, einem verspannten Zustand (Z₂) der geschlitzten Buchse entsprechenden Innendurchmesser (D₂) verringerbar ist.

4. Haltevorrichtung nach einem der Ansprüche 1 bis 3, **dadurch gekennzeichnet, dass** die geschlitzte Buchse gesondert vom Halteelement (3) als Teil der Befestigungsvorrichtung (4) ausgebildet ist.

5. Haltevorrichtung nach Anspruch 4, **dadurch gekennzeichnet, dass** die Keilfläche (K₄) der Befestigungsvorrichtung (4) durch eine zumindest teilweise konusförmige Außenfläche der Befestigungsvorrichtung (4) gebildet ist.

6. Haltevorrichtung nach einem der Ansprüche 1 bis 3, **dadurch gekennzeichnet, dass** die geschlitzte Buchse einstückig mit dem Halteelement (3) ausgebildet ist.

7. Haltevorrichtung nach Anspruch 6, **dadurch gekennzeichnet, dass** die Befestigungsvorrichtung (4) zumindest eine Klammer (24) mit zwei voneinander beabstandeten Klammerflächen (H) - welche der Keilfläche (K₄) der Befestigungsvorrichtung (4) entsprechen - aufweist, wobei die Klammerflächen (H) der Befestigungsvorrichtung (4) auf im Bereich des Schlitzes (5) von der Spannfläche (M) abgewandt angeordnete, voneinander beabstandete Klammergegenflächen (G) - welche der Keilfläche (K₃) des Halteelements (3) entsprechen - anlegbar sind.

8. Set (12) mit einer Haltevorrichtung (1) nach einem der Ansprüche 1 bis 7 und zumindest einem, vorzugsweise kreiszylinderförmigen, dentalen Werkstück (2).

9. Bearbeitungsmaschine (13), insbesondere CNC-Maschine, mit einem Bearbeitungswerkzeug (14) und einer Haltevorrichtung (1) nach einem der Ansprüche 1 bis 7 für ein Werkstück (2).

10. Bearbeitungsmaschine nach Anspruch 9, **dadurch gekennzeichnet, dass** die Bearbeitungsmaschine (13) eine bewegbare, vorzugsweise kardangelenkartig ausgebildete, Positioniervorrichtung (15) aufweist, wobei die Haltevorrichtung (1) an der Positioniervorrichtung (15) lösbar befestigbar ist.

11. Verfahren zur Herstellung einer Haltevorrichtung (1) in einer Bearbeitungsmaschine (13), insbesondere in einer CNC-Maschine, wobei Werkstücke in die Bearbeitungsmaschine (13) eingespannt werden und wobei in einem Haltevorrichtung-Produktionsmodus (P₁) der Bearbeitungsmaschine (13) aus diesen Werkstücken das Halteelement (3) und die Befestigungsvorrichtung (4) der Haltevorrichtung (1) nach einem der Ansprüche 1 bis 7 hergestellt, vorzugsweise gefräst, werden.

12. Verfahren nach Anspruch 11, **dadurch gekennzeichnet, dass** lesbare und ausführbare Daten (N) des Halteelements (3) und der Befestigungsvorrichtung (4) in einem Speicher (16) hinterlegt werden, dass im Haltevorrichtung-Produktionsmodus (P₁) diese Daten (N) ausgelesen werden und auf Basis dieser Daten (N) der Haltevorrichtung-Produktionsmodus (P₁) ausgeführt wird.

13. Datenträger (17), auf dem das Verfahren nach Anspruch 11 oder 12 in Form von, von einer Bearbeitungsmaschine (13) lesbaren und als Haltevorrichtung-Produktionsmodus (P₁) zur Herstellung der Haltevorrichtung (1) ausführbaren Daten (N) gespeichert ist.

## Claims

1. A holding apparatus (1) for an in particular dental workpiece (2) comprising a holding element (3) and a fixing device (4), wherein the workpiece (2) can be fixed to the holding apparatus (1) by a relative movement (R) of the fixing device (4) with respect to the holding element (3), wherein the holding element (3) and the fixing device (4) have mutually corresponding wedge surfaces (K₃, K₄) and the fixing device (4) can be fixed against the holding element (3) by the relative movement (R) of the fixing device (4) with respect to the holding element (3) by way of the wedge surfaces (K₃, K₄) which bear against each other and wherein the fixing device (4) or the holding element (3) has a split sleeve with a slit (5) which is extending along a longitudinal axis (L), wherein the inside surface of the split sleeve forms a clamping surface (M) for the workpiece (2) and wherein upon the relative movement (R) of the fixing device (4) with respect to the holding element (3) the workpiece can be braced against the holding device (1) by way of the clamping surface (M), **characterised in that** the slit (5) in longitudinal direction (L) reaches from an upper edge to a lower edge of the fixing device (4) or of the holding element (3), wherein the slit (5) is formed as an opening or is filled with a yielding material.

2. A holding apparatus as set forth in claim 1 **characterised in that** the split sleeve is of a part-annular configuration around the longitudinal axis (L) with a preferably axially directed slit (5).

3. A holding apparatus as set forth in claim 2 **characterised in that** the clamping surface (M) of the split sleeve can be applied against the workpiece (2) and the clamping surface (M) has a first inside diameter (D₁) corresponding to a loose condition (Z₁) of the split sleeve, wherein the clamping surface (M) can be reduced to a second inside diameter (D₂) corresponding to a braced condition (Z₂) of the split sleeve by the relative movement (R) of the fixing device (4) with respect to the holding element (3) with a narrowing of the slit (5).

4. A holding apparatus as set forth in one of claims 1 through 3 **characterised in that** the split sleeve is provided separately from the holding element (3) as part of the fixing device (4).

5. A holding apparatus as set forth in claim 4 **characterised in that** the wedge surface (K₄) of the fixing device (4) is formed by an at least partially conical outside surface of the fixing device (4).

6. A holding apparatus as set forth in one of claims 1 through 3 **characterised in that** the split sleeve is in one piece with the holding element (3).

7. A holding apparatus as set forth in claim 6 **characterised in that** the fixing device (4) has at least one clamp (24) with two mutually spaced clamp surfaces (H) - which correspond to the wedge surface (K₄) of the fixing device (4) -, wherein the clamp surfaces (H) of the fixing device (4) can be applied against mutually spaced counterpart clamp surfaces (G) arranged in the region of the slit (5) and facing away from the clamping surface (M) - which correspond to the wedge surface (K₃) of the holding element (3).

8. A set (12) comprising a holding apparatus (1) as set forth in one of claims 1 through 7 and at least one dental workpiece (2) which is preferably of a circular cylindrical shape.

9. A processing machine (13), in particular a CNC machine, comprising a processing tool (14) and a holding apparatus (1) as set forth in one of claims 1 through 7 for a workpiece (2).

10. A processing machine as set forth in claim 9 **characterised in that** the processing machine (13) has a moveable positioning device (15) which is preferably of a cardan joint-like configuration, wherein the holding apparatus (1) can be releasably fixed to the positioning device (15).

11. A process for the production of a holding apparatus (1) in a processing machine (13), in particular in a CNC machine, wherein workpieces are clamped into the processing machine (13) and wherein in a holding apparatus production mode (P₁) of the processing machine (13) the holding element (3) and the fixing device (4) of the holding apparatus (1) as set forth in one of claims 1 through 7 are produced, preferably milled, from said workpieces.

12. A process as set forth in claim 11 **characterised in that** data (N) which can be read and executed of the holding element (3) and the fixing device (4) are stored in a memory (16), said data (N) are read out in the holding apparatus production mode (P₁) and the holding apparatus production mode (P₁) is carried out on the basis of said data (N).

13. A data carrier (17) on which the process as set forth in claim 11 or claim 12 is stored in the form of data (N) which can be read by a processing machine (13) and which can be executed as a holding apparatus production mode (P₁) for production of the holding apparatus (1).

## Revendications

1. Dispositif de maintien (1) pour une pièce à usiner (2), plus particulièrement dentaire, avec un élément de maintien (3) et un dispositif de fixation (4), dans lequel la pièce à usiner (2) peut être fixée au dispositif de maintien (1) par un mouvement relatif (R) du dispositif de fixation (4) par rapport à l'élément de maintien (3), dans lequel l'élément de maintien (3) et le dispositif de fixation (4) présentent des surfaces cunéiformes (K₃, K₄) correspondantes entre elles et, par le mouvement relatif (R) du dispositif de fixation (4) par rapport à l'élément de maintien (3) sur les surfaces cunéiformes (K₃, K₄) adjacentes l'une à l'autre, le dispositif de fixation (4) peut être fixé à l'élément de maintien (3), et dans lequel le dispositif de fixation (4) ou l'élément de maintien (3) présente un coussinet fendu avec une fente (5) s'étendant dans le sens longitudinal (L), dans lequel la surface interne du coussinet fendu forme une surface de serrage (M) pour la pièce à usiner (2) et dans lequel, lors du mouvement relatif (R) du dispositif de fixation (4) par rapport à l'élément de maintien (3), la pièce à usiner (2) peut être serrée sur le dispositif de maintien (1) par l'intermédiaire de la surface de serrage (M), **caractérisé en ce que** la fente (5) s'étend dans le sens longitudinal (L) d'un bord supérieur à un bord inférieur du dispositif de fixation (4) ou de l'élément de maintien (3), dans lequel la fente (5) est conçue comme un évidement ou est remplie d'un matériau souple.

2. Dispositif de maintien selon la revendication 1, **caractérisé en ce que** le coussinet fendu est conçu en forme d'anneau partiel autour d'un axe longitudinal (L) avec la fente (5) orientée de préférence de façon axiale.

3. Dispositif de maintien selon la revendication 2, **caractérisé en ce que** la surface de serrage (M) du coussinet fendu peut être appliquée sur la pièce à usiner (2) et **en ce que** la surface de serrage (M) présente un premier diamètre interne (D₁) correspondant à un état lâche (Z₁) du coussinet fendu, dans lequel par le mouvement relatif (R) du dispositif de fixation (4) par rapport à l'élément de maintien (3), par rétrécissement de la fente (5), la surface de serrage (M) peut être réduite à un deuxième diamètre interne (D₂) correspondant à un état tendu (Z₂) du coussinet fendu.

4. Dispositif de maintien selon l'une des revendications 1 à 3, **caractérisé en ce que** le coussinet fendu est conçu séparément de l'élément de maintien (3) comme partie du dispositif de fixation (4).

5. Dispositif de maintien selon la revendication 4, **caractérisé en ce que** la surface cunéiforme (K₄) du dispositif de fixation (4) est formée par une surface externe, au moins partiellement en forme de cône, du dispositif de fixation (4).

6. Dispositif de maintien selon l'une des revendications 1 à 3, **caractérisé en ce que** le coussinet fendu est conçu d'une seule pièce avec l'élément de maintien (3).

7. Dispositif de maintien selon la revendication 6, **caractérisé en ce que** le dispositif de fixation (4) présente au moins une agrafe de fixation (24) avec deux surfaces de retenue (H) - lesquelles correspondent à la surface cunéiforme (K₄) du dispositif de fixation (4) - distantes l'une de l'autre, dans lequel les surfaces de retenue (H) du dispositif de fixation (4) peuvent être appliquées sur des contre-surfaces de retenue (G) - lesquelles correspondent à la surface cunéiforme (K₃) de l'élément de maintien (3) - distantes les unes des autres, disposées de façon opposée à la surface de serrage (M) dans la zone de la fente (5).

8. Ensemble (12) avec un dispositif de maintien (1) selon l'une des revendications 1 à 7 et au moins une pièce à usiner (2) dentaire, de préférence en forme de cylindre circulaire.

9. Machine d'usinage (13), plus particulièrement machine CNC, avec un outil d'usinage (14) et un dispositif de maintien (1) selon l'une des revendications 1 à 7 pour une pièce à usiner (2).

10. Machine d'usinage selon la revendication 9, **caractérisée en ce que** la machine d'usinage (13) présente un dispositif de positionnement (15) mobile, conçu de préférence du type joint à la Cardan, dans laquelle le dispositif de maintien (1) peut être fixé de façon détachable au dispositif de positionnement (15).

11. Procédé de fabrication d'un dispositif de maintien (1) dans une machine d'usinage (13), plus particulièrement dans une machine CNC, dans lequel des pièces à usiner sont serrées dans la machine d'usinage (13) et dans lequel, dans un mode de production d'un dispositif de maintien (P₁) de la machine d'usinage (13), l'élément de maintien (3) et le dispositif de fixation (4) du dispositif de maintien (1) sont fabriqués, de préférence fraisés, à partir de ces pièces à usiner selon l'une des revendications 1 à 7.

12. Procédé selon la revendication 11, **caractérisé en ce que** des données lisibles et exécutables (N) de l'élément de maintien (3) et du dispositif de fixation (4) sont consignées dans une mémoire (16), **en ce que** dans le mode de production d'un dispositif de maintien (P1), ces données (N) sont sélectionnées et sur la base de ces données (N) est réalisé le mode de production d'un dispositif de maintien (P₁).

13. Support de données (17), sur lequel le procédé selon la revendication 11 ou 12 est enregistré sous forme de données (N) lisibles par une machine d'usinage (13) et exécutables comme mode de production d'un dispositif de maintien (P₁) pour la fabrication du dispositif de maintien (1).
